(19) Europäisches Patentamt
European Patent Office
Office européen des brevets

(11) **EP 4 001 443 A1**

(12) **EUROPEAN PATENT APPLICATION**
published in accordance with Art. 153(4) EPC

(43) Date of publication:
**25.05.2022 Bulletin 2022/21**

(21) Application number: **20843775.6**

(22) Date of filing: **06.07.2020**

(51) International Patent Classification (IPC):
**C22B 5/02** (2006.01)    **C22B 7/04** (2006.01)
**C22B 11/02** (2006.01)

(52) Cooperative Patent Classification (CPC):
**C22B 5/02; C22B 7/04; C22B 11/02; Y02P 10/20**

(86) International application number:
**PCT/JP2020/026339**

(87) International publication number:
**WO 2021/014946 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.07.2019 JP 2019133690**
**14.01.2020 JP 2020003745**

(71) Applicants:
• **Waseda University**
**Tokyo 169-8050 (JP)**
• **Dowa Metals & Mining Co., Ltd.**
**Tokyo 101-0021 (JP)**

• **Nippon PGM Co. Ltd.**
**Tokyo 101-0021 (JP)**

(72) Inventors:
• **SUGAWARA Keiichi**
**Tokyo 101-0021 (JP)**
• **YATSUHASHI, Hiromitsu**
**Tokyo 101-00021 (JP)**
• **YAMAGUCHI, Katsunori**
**Tokyo 169-8050 (JP)**
• **MURATA, Takashi**
**Tokyo 169-8050 (JP)**

(74) Representative: **Müller-Boré & Partner**
**Patentanwälte PartG mbB**
**Friedenheimer Brücke 21**
**80639 München (DE)**

(54) **PGM RECOVERY METHOD**

(57) There is provided a method for recovering PGM, in which at least one base metal oxide selected from a group consisting of copper oxide, iron oxide, tin oxide, nickel oxide and lead oxide is added to and melted in a molten slag, and a PGM alloy contained in the molten slag is recovered.

FIG. 1

EP 4 001 443 A1

**EP 4 001 443 A1**

**Description**

Technical Field

The present invention relates to a method for recovering PGM from an object to be treated containing the PGM, the object to be treated being various members containing a platinum group metal (may be referred to as "PGM" in the present invention), for example, used catalysts for purifying automobile exhaust gas, used electronic substrates and lead frames, used petrochemical catalysts, etc.

Description of Related Art

Conventionally, there is provided a method for recovering PGM from an object to be treated containing the PGM, the PGM being various members containing PGM like a used automobile exhaust gas purification catalyst. For example, an applicant of the present invention discloses an efficient dry recovery method for recovering PGM, in which the object to be treated containing PGM is heated and melted together with a copper source material and the PGM is absorbed in a produced molten metal (See Patent Document 1).
In the dry recovery method for recovering PGM according to Patent Document 1, the object to be treated containing PGM and the copper source material containing copper oxide are loaded into a closed reduction furnace together with a flux component and a reducing agent and melted. Then, the PGM is concentrated and recovered in a molten metal settled in a lower part of a produced oxide-based molten slag (it may be described as a "reduction smelting step" in the present invention). On the other hand, this method is also configured so that the molten slag having a reduced copper content is discharged from the reduction furnace, and a granular copper source material having a constant particle size is used as the copper source material.

[Prior Art Document]

[Patent Document]

[Patent Document 1] Japanese Unexamined Patent Publication No. 2009-24263

Summary of the Invention

Problem to be solved by the Invention

Without being satisfied with the above results, the present inventors have conducted research on a more efficient method for recovering PGM from an object to be treated containing PGM, and pay attention to the fact that the method of Patent Document 1 was able to recover PGM in the object to be treated with high efficiency and high yield, but PGM remained in the molten slag discharged from the recovery step.
An object to be solved by the present invention is to provide a method for recovering PGM remaining in this molten slag.

Means for solving the Problem

As a result of researching a method for recovering PGM remaining in a molten slag, the inventors of the present invention found that PGM can be recovered by adding a base metal oxide to the molten slag.
That is, in order to solve the above-described problem, a first invention provides a method for recovering PGM, including:

placing an object to be treated containing PGM, a base metal and/or a base metal oxide, a flux, and a reducing agent in a reduction furnace used for reduction smelting, and heating a mixture thereof, to form a molten slag and a reduction furnace metal;
extracting the molten slag from the reduction furnace to obtain a reduction furnace metal containing PGM; and
transferring the reduction furnace metal to an oxidation furnace used for oxidative smelting, forming a base metal oxide slag and a PGM alloy, then, extracting the base metal oxide slag to obtain a PGM alloy enriched with PGM,
wherein at least one base metal oxide selected from a group consisting of copper oxide, iron oxide, tin oxide, nickel oxide and lead oxide is added to the molten slag, to recover the PGM alloy contained in the molten slag.

A second invention provides the method for recovering PGM according to the first invention, wherein less than

2

35 mass% of the base metal oxide with respect to a mass of the molten slag, is added.

A third invention provides the method for recovering PGM according to the first or second invention, wherein at least one base metal oxide selected from the group consisting of copper oxide, iron oxide, tin oxide, nickel oxide and lead oxide is added to the molten slag, and when recovering the PGM alloy contained in the molten slag, a retaining time of at least 2 hours is provided.

A fourth invention provides the method for recovering PGM according to any one of the first to third inventions, wherein 10 times or more and 500 times or less of the mass of the PGM contained in the molten slag is added as the base metal oxide.

Advantage of the Invention

According to the present invention, by adding a base metal oxide to a molten slag, a PGM alloy can be recovered from the molten slag.

Brief Description of the Drawings

FIG. 1 is a step flow chart of a method for recovering PGM from a molten slag, according to the present invention.
FIG. 2 is a step flow chart of the method for recovering PGM from the molten slag, according to a different embodiment of the present invention.
FIG. 3 is a step flow chart of the method for recovering PGM, according to a conventional technique.
FIG. 4 is a graph in which the vertical axis represents the Pt concentration in a molten slag sample after separating a recovered metal, and the horizontal axis represents a sampling time after adding a base metal oxide.

Detailed description of the Invention

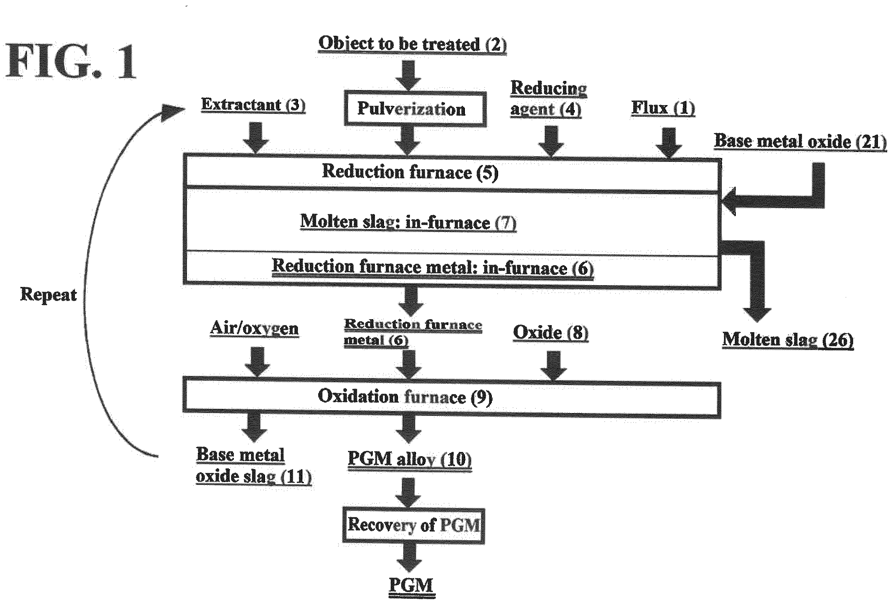

A method for recovering PGM according to the present invention will be described, with reference to the drawings (FIGS. 1 to 3) in an order of [1] Reduction smelting step, [2] Oxidative smelting step, [3] Problems and solutions of reduction smelting step according to a conventional technique, [4] Reduction smelting step according to the present invention, [5] Oxidative smelting step according to the present invention, and [6] Example of method for recovering PGM according to the present invention.

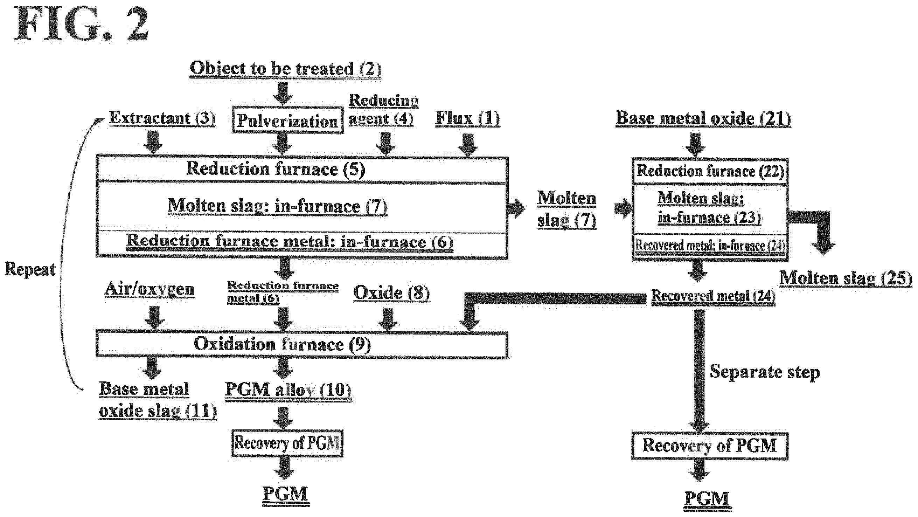

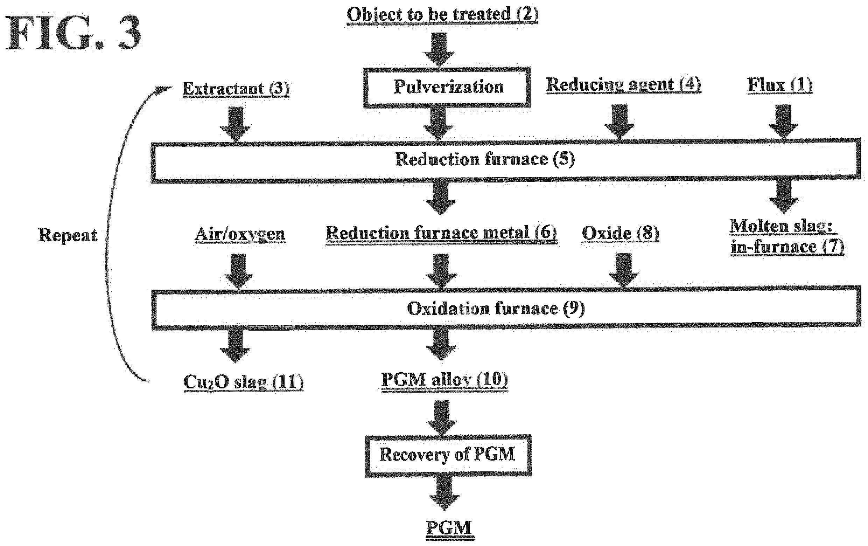

FIG. 1 is a step flow chart of a method for recovering PGM from a molten slag according to the present invention, FIG. 2 is a step flow chart of the method for recovering PGM from a molten slag according to a different embodiment of the present invention, and FIG. 3 is a step flow chart of the method for recovering PGM according to a conventional technique.

A raw material, an additive, a product, a waste, and a step used in the step flow of these methods for recovering PGM are attached with signs and numerals, and the raw material and the like with the same signs and numerals are the same.

First, with reference to FIG. 3, the step flow of an example of the method for recovering PGM according to a conventional technique will be described in an order of [1] Reduction smelting step, [2] Oxidative smelting step, [3] Problem and solution of the reduction smelting step according to a conventional technique. Next, with reference to FIGS. 1 and 2, the step flow will be described in an order of [4] Reduction smelting step according to the present invention and [5] Oxidative smelting step according to the present invention.

[1] Reduction smelting step

As illustrated in FIG. 3, an object to be treated (2) containing PGM, for example, a pulverized product of a ceramic automobile catalyst; a base metal and/or a base metal oxide that is an extractant (3); CaO and/or $SiO_2$ that is a flux (1); and a C (carbon)-containing material that is an example of a reducing agent (4), are loaded into a reduction furnace (5) used for reduction smelting.

Then, an electrode in the furnace is energized to heat and melt the loaded matter.

In the present invention, the base metal is a metal having a higher ionization tendency than PGM, and when considering the use of the base metal as the extractant (3), copper, iron, tin, nickel and lead can be preferably used from a viewpoint of ease of handling, cost and the like. Accordingly, as the base metal oxide as well, copper oxide, iron oxide, tin oxide, nickel oxide and lead oxide can be preferably used, and, for example, when copper is used as the base metal, copper oxide is also used as the base metal oxide, and when iron is used, it is preferable to use the same kind of metal as the base metal and the base metal oxide, such as iron oxide, from a viewpoint of improving an efficiency of PGM recovery. Typically, it is particularly preferable to use copper as the base metal and copper oxide as the base metal oxide from a viewpoint of increasing a recovery rate of PGM.

As the reducing agent (4), for example, C (carbon), SiC, CO gas, methane gas, propane gas, ammonia gas, and metals that are more easily oxidized than the base metals such as metals Al and Ti can be used. With these reducing agents, an atmosphere is carbon-saturated to make it reductive, to reduce copper oxide melted in the slag.

Then, a reduction furnace metal (6), which is an alloy of the base metal containing PGM, settles in a reduction furnace (5) used for reduction smelting, in a lower part of a molten slag (7) mainly composed of oxide ($CaO$-$SiO_2$-$Al_2O_3$). At this time, PGM is concentrated in the reduction furnace metal (6) that has settled in the lower part. Thereafter, the molten slag (7) having a base metal content reduced to 3.0 mass% or less is extracted from the reduction furnace (5) used for reduction smelting and discharged.

That is, according to the present invention, the "reduction furnace metal (6)" is a copper alloy-based molten metal containing PGM which is obtained by melting a pulverized product of the object to be treated (2), a reducing agent (4), a flux (1) and an extractant (3) in the reduction furnace (5) used for reduction smelting, and thereafter extracting and discharging the produced molten slag (7).

As described above, after melting a loaded matter in the reduction furnace (5) used for reduction smelting of a pulverized product of the object to be treated (2) and others, the molten slag (7) is extracted and separated and discharged to obtain the reduction furnace metal (6). This step is a "reduction smelting step", which is a method similar to reducing iron oxide ore in a blast furnace to obtain pig iron in steel smelting.

[2] Oxidative smelting step

The reduction furnace metal (6) obtained in the reduction smelting step and enriched with PGM is extracted from the reduction furnace (5) used for reduction smelting, and a mixture in a molten state is transferred to an oxidation furnace (9) used for oxidative smelting, and further, air and/or oxygen is blown to oxidize. Then, the reduction furnace metal (6) is layer-separated into a base metal oxide slag (11) mainly composed of a base metal oxide and a PGM alloy (10) further enriched with PGM.

That is, the "PGM alloy (10)" in the present invention is an alloy material mainly composed of a base metal and PGM, which are obtained by blowing air and/or oxygen into the reduction furnace metal (6) to oxidize in the oxidation furnace (9) used for oxidative smelting, and then extracting the produced base metal oxide slag (11).

After discharging the base metal oxide slag (11) produced on a molten metal surface of the PGM alloy (10) to outside of the oxidation furnace (9) used for oxidative smelting, air and/or oxygen is blown in again to separate the oxide-based base metal oxide slag (11) from the PGM alloy (10) further enriched with PGM. Then, the base metal oxide slag (11) produced on the molten metal surface of the PGM alloy (10) is discharged again to the outside of the oxidation furnace (9) used for oxidative smelting.

Then, by repeating an oxidation treatment in the oxidation furnace (9) used for oxidative smelting described above and a discharge treatment of discharging the base metal oxide slag (11), a PGM content in the PGM alloy (10) is further enriched.

In the oxidation furnace (9) used for the above-described oxidative smelting, the step of obtaining the PGM alloy (10) containing the enriched PGM is the "oxidative smelting step", and this step is similar to the step of oxidizing and removing impurities such as carbon, silicon, and phosphorus in pig iron in steel smelting.

[3] Problem and solution of the reduction smelting step according to a conventional technique

According to a research by the present inventors, it is found that the molten slag produced in the reduction smelting step according to the conventional technique contains a PGM alloy. Then, the molten slag produced in the conventional technique was extracted from the reduction furnace (5) used for reduction smelting while containing the PGM alloy, and further discharged to become waste.

The present inventors have conducted research considering that recovering the PGM alloy contained in the molten slag that finally becomes waste is a problem of the reduction smelting step according to the conventional technique. Then, as a result of the research, it is found that the PGM alloy can be recovered by an easy method of adding the base metal oxide to the molten slag produced in the reduction smelting step.

[4] Reduction smelting step according to the present invention

The reduction smelting step according to the present invention is the step of adding particles of a base metal oxide (21) to the molten slag (7), adding, dissolving and reducing the particles, and recovering the PGM alloy remaining in the molten slag (7). Hereinafter, <1> base metal oxide and <2> method for adding base metal oxide, will be described in this order with reference to FIGS. 1 and 2. However, the description may be omitted for the portion that overlaps with the conventional technique that has already been described with reference to FIG. 3.

<1> base metal oxide

As the base metal oxide (21) to be added to the molten slag (7), it is preferable to use any one or more selected from copper oxide, iron oxide, tin oxide, nickel oxide and lead oxide, which are the same as the base metal oxide described in "[1] Reduction and smelting step".

In this case, although it is possible to use a base metal oxide different from the base metal oxide used in the "[1] Reduction smelting step", it is advantageous to use the same base metal oxide as the base metal oxide used in the "[1] Reduction smelting step" from a viewpoint of PGM recovery described later. Since it is preferable to use copper and/or copper oxide in the reduction smelting step, it is preferable to use copper oxide as the base metal oxide added to the molten slag.

The base metal oxide (21) is preferably in the form of granules that are easily melted after being added to the molten slag. Further, a particle size may be 1 mm or less, and more preferably 100 μm or less.

Further, an addition amount of the base metal oxide (21) is preferably 5 mass% or more and less than 35 mass% with respect to a mass of the molten slag (7). This is because by adding in this range, a recovery effect of the PGM alloy can be obtained, and when the addition amount is less than 25 mass%, the retention time until the base metal oxide (21), which will be described later, is settled, does not become too long, and a productivity is guaranteed.

Further, an addition amount of the base metal oxide (21) is preferably 10 times or more and 500 times or less with respect to the mass of the PGM contained in the molten slag (7). This is because by adding 10 times or more of the base metal oxide (21) with respect to the mass of the PGM, a recovery rate of the PGM alloy suspended in the molten slag (7) can be guaranteed. On the other hand, when the addition amount is 500 times or less, it is possible to avoid the recovery time of the PGM alloy from becoming too long, and a metal concentration in the slag becomes too high, and it is possible to avoid enriched PGM alloy loss due to the molten slag (25) after recovering the recovered metal and the molten slag (26) after recovering the PGM alloy. From this viewpoint, the addition amount of the base metal oxide (21) with respect to the mass of the PGM contained in the molten slag (7) is more preferably 100 times or more and 300 times or less.

Quantitative analysis of the amount of the PGM alloy contained in the molten slag (7) can be performed, for example, by ICP analysis.

<2> Method for adding base metal oxide

It can be considered that the base metal oxide (21) is added to the molten slag (7) and then capture the remaining PGM alloy while settling in the molten slag (7). Therefore, it is preferable to provide a retaining time of at least 2 hours after the addition of the base metal oxide (21). This is because when the retaining time is 2 hours or more, the settlement of the base metal oxide (21) proceeds sufficiently, and a state in which the base metal oxide (21) is suspended in the molten slag (7) can be completed.

From a viewpoint of increasing a capture efficiency of the remaining PGM alloy in the molten slag (7) by the base metal oxide (21), the base metal oxide (21) is preferably melted once in the molten slag (7). Accordingly, the temperature of the molten slag (7) after the addition of the base metal oxide (21) is preferably higher than a melting point of the base metal oxide (21) or preferably higher than the eutectic temperature of a slag formed by in-furnace slag (7) and base metal oxide (21). When the base metal oxide (21) does not melt in the molten slag (7), this is because the base metal oxide (21) may precipitate and settle without contributing to an alloying reaction with the suspended PGM alloy.

The addition of the base metal oxide (21) can be performed after and/or before the extraction of the molten slag (7) from the reduction furnace (5) used for reduction smelting. Hereinafter, explanation will be given in an order of << a >> when the base metal oxide is added before extraction of the molten slag, with reference to FIG. 1, and << b >> when the base metal oxide is added after extraction of the molten slag, with reference to FIG. 2.

<< a >> when the base metal oxide is added before extraction of the molten slag

The base metal oxide (21) is put into the molten slag (7) from an upper part of the reduction furnace (5) used for reduction smelting before extraction of the molten slag (7) in the reduction furnace (5) used for reduction smelting, and can be retained. It is preferable that the base metal oxide (21) is put therein over a wide range on the surface of the molten slag (7) from a viewpoint of increasing a contact efficiency with the PGM alloy remaining in the molten slag (7).

The time for retaining the base metal oxide (21) in the molten slag (7) is preferably 2 hours or more. It can be considered that due to such a retaining, the base metal oxide (21) is reduced to form an alloy with the PGM alloy, and further sufficient particle growth makes it easier to settle. The alloy of a settled base metal oxide (21)-derived metal and a recovered PGM alloy is combined with the reduction furnace metal (6).

On the other hand, the molten slag (26) after recovering the PGM alloy becomes waste.

<< b >> When the base metal oxide is added after extraction of the molten slag

When the base metal oxide (21) is added after the molten slag (7) is extracted from the reduction furnace (5) used for reduction smelting, the molten slag (7) is kept in a molten state again by using a reduction furnace (22), etc., different from the reduction furnace (5) used for reduction smelting, and by putting the base metal oxide (21) there and letting it stand until it settles, an alloy layer with the PGM alloy remaining in the molten slag (7) is separated from the molten slag (23) in the reduction furnace, and is formed on the bottom of the reduction furnace (22) as a recovered metal (24), to thereby recover the remaining PGM alloy.

On the other hand, the molten slag (25) after recovering the recovered metal becomes waste.

The PGM alloy (10) may be obtained by adding the recovered metal (24) to the oxidation furnace (9) used for oxidative smelting, and further PGM may be obtained in this step, or PGM may be obtained by providing a separate appropriate step.

[5] Oxidative smelting step according to the present invention

A distribution ratio of platinum, rhodium, and palladium between the base metal oxide slag (11) and the PGM alloy (10) in the oxidative smelting step according to the present invention is about 100 times larger than a value of a distribution ratio between the molten slag (7) and the reduction furnace metal (6) in the reduction smelting step. Therefore, in the process of concentrating the PGM between the PGM alloy recovered by the base metal oxide and the reduction furnace metal (6), a considerable amount of PGM is distributed to the produced base metal oxide slag (11). That is, the recovery rate of PGM as the PGM alloy (10) is suppressed.

Therefore, it is preferable that the base metal oxide slag (11) to which a corresponding amount of PGM was distributed, is repeatedly added again as the extractant (3) to the reduction smelting step to be performed thereafter. With this configuration, a considerable amount of PGM distributed to the base metal oxide slag (11) circulates in a system of the reduction smelting step and the oxidative smelting step, and as a result, PGM can be recovered with high efficiency.

Further, it is preferable that the oxide (8) is added during the oxidative smelting step, the molten reduction furnace metal (6) is stirred, and then is allowed to stand. Thereby, the distribution of PGM to the base metal oxide slag (11) can be reduced.

[6] Example of method for recovering PGM according to the present invention

The PGM recovery step according to the present invention will be described with reference to an example.

The object to be treated (2) containing PGM such as a ceramic automobile catalyst, the base metal and/or the base metal oxide that is the extractant (3), CaO and/or $SiO_2$ that is the flux (1), and the C-containing material such as SiC which is the reducing agent (4), are loaded into the reduction furnace (5) used for reduction smelting and heated.

Thereafter, the molten metal, which is the alloy of the base metal containing PGM, is precipitated in the lower part of the molten slag (7) mainly composed of an oxide ($CaO$-$SiO_2$-$Al_2O_3$), to obtain the reduction furnace metal (6) in which PGM is concentrated in the base metal alloy.

On the other hand, fine powder of copper oxide as the base metal oxide (21) is dispersed and added over an entire surface of the molten slag (7), with a base metal content reduced to 3.0 mass% or less, and allowed to stand for about 4 to 10 hours, then, the molten slag (7) is extracted from the reduction furnace (5) used for reduction smelting and discharged.

Then, the reduction furnace metal (6) enriched with PGM is extracted and transferred to the oxidation furnace (9) used for oxidative smelting in a molten state. When the molten reduction furnace metal (6) is oxidatively smelted, one or more selected from $SiO_2$, $CaO$, and $Na_2O$ can be added as the above-described oxide (8). When the oxide (8) such as $SiO_2$ is added to the reduction furnace metal (6), it is preferable to add the oxide (8) in a small amount rather than adding an entire amount at once. This is because when the entire amount of the oxide (8) to be added is added to the reduction furnace metal (6) at once, the solution temperature of the molten reduction furnace metal (6) is lowered, and the added oxide (8) cannot be melted. Accordingly, the time for adding the oxide (8) depends on an amount of the molten reduction furnace metal (6), but it is preferable to add the oxide (8) over 20 minutes or more.

After the oxide (8) is added, the reduction furnace metal (6) is stirred to dissolve the oxide (8), and as a method for stirring the solution, aeration with air and/or oxygen is preferable.

After the oxide (8) is dissolved, the solution is allowed to stand. At this time, it can be considered that the temperature near the center of the melt in the oxidation furnace (9) used for oxidative smelting is 1200 to 1500 °C. Then, the oxide-based base metal oxide slag (11) and the PGM alloy (10) further enriched with PGM are separated to obtain the PGM alloy (10). From the obtained PGM alloy (10), PGM is obtained by an appropriate recovery method (mainly a wet method).

Examples

(Example 1)

$Al_2O_3$ and $SiO_2$ reagents and CaO obtained by calcining the $CaCO_3$ reagent were prepared. Then, these were weighed and mixed so as to be 35 mass% of $Al_2O_3$, 30 mass% of CaO, and 35 mass% of $SiO_2$. 200 g of slag prepared by a dry method was inserted into an MgO crucible together with 125 g (62.8 g after 12 hours) of rod-shaped graphite. The sample was melt-retained at 1450°C. Then, 100 g of $Al_2O_3$ (35 mass%) - CaO (30mass%) - $SiO_2$ (35 mass%) and 0.3 g of Pt powder having a particle size of 0.4 to 0.8 $\mu$m were added into the slag retained at 1450°C, and retained for another 3 hours, to obtain a slag that imitates the molten slag obtained in the above example of the method for recovering PGM.

Subsequently, 33.78 g of $Cu_2O$ (including 30 g of Cu in terms of metallic Cu) was added as a base metal oxide to the slag that had been continuously heated at 1450°C. A particle size of the added $Cu_2O$ was 53 $\mu$m or less. After addition of the base metal oxide, heating was continued at 1450°C, and about 1 g of a molten slag sample was sampled by suction every 0.5, 1, 2, 3, 4, 6, 8, and 12 hours, and water-cooled, and after 12 hours, the molten slag sample was water-cooled together with the MgO crucible, and the sample was collected. Sampling by sucking up the molten slag sample was carried out using a mullite tube and a syringe from near the center in a thickness direction of a molten slag layer.

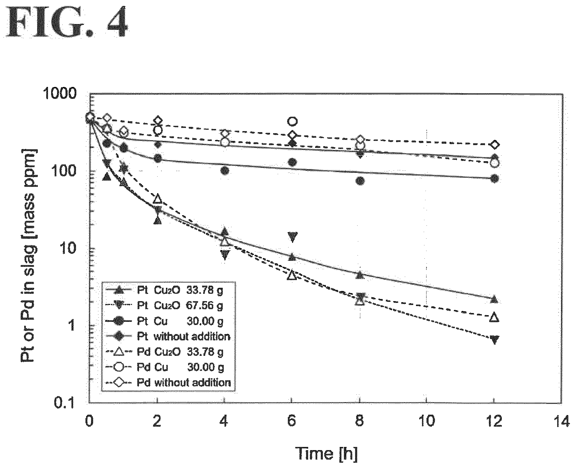

The recovered metal (metallic copper) was separated from each recovered molten slag sample. Then, the Pt concentration in the molten slag sample after separating the recovered metal (metallic copper) was measured. This result was plotted with - A- in the graph of FIG. 4.

Here, the graph of FIG. 4 is a semi-logarithmic graph in which the vertical axis represents a logarithm of the Pt concentration (ppm) in the molten slag sample after separating the recovered metal (metallic copper), and the horizontal axis represents the sampling time after adding the base metal oxide.

Table 1 shows component analysis results of the recovered metal (metallic copper) measured by ICP.

Further, Table 2 shows a recovery rate of PGM after water-cooling in this example. The recovery rate was calculated using the following formula.

$$R = \frac{m_m \cdot x_m}{m_s \cdot x_s + m_m \cdot x_m} \times 100 \cdots\cdots\cdots\cdots (Formula)$$

wherein, R is the recovery rate (%), mm is the mass of an alloy phase (g), $m_s$ is the mass of a slag phase (g), $x_m$ is a PGM concentration of the alloy phase (mass%), and $x_s$ is the PGM concentration of the slag phase (mass%)). In addition to the components $Al_2O_3$, CaO, and $SiO_2$, the slag contains MgO, which is a crucible component, $Cu_2O$ derived from an extractant, and suspended metal particles. Further, due to collecting samples for each retention time, a total reduction is about 8 g, but assuming that the influence on these slag masses is small, the mass ms of the slag phase was calculated as 300 g, which is the mass of molten $Al_2O_3$, CaO, and $SiO_2$.

(Example 2)

The same operation as in example 1 was performed except that 67.56 g (including 60 g of Cu in terms of metallic Cu) of $Cu_2O$ powder was added to the molten slag sample as a base metal oxide.

The recovered metal (metallic copper) was separated from each recovered molten slag sample. Then, the Pt concentration in the molten slag sample after separating the recovered metal (metallic copper) was measured. This result was plotted in the graph of FIG. 4 with ... ▼ ....

Table 1 shows component analysis results of the recovered metal (metallic copper) measured by ICP.

Further, table 2 shows the recovery rate of PGM after water-cooling in this example.

(Comparative example 1)

The same operation as in example 1 was performed except that 30 g of Cu powder (particle size: 53 $\mu$m or less) was added to the molten slag sample in place of the base metal oxide.

The recovered metal (metallic copper) was separated from each recovered molten slag sample. Then, the Pt concentration in the molten slag sample after separating the recovered metal (metallic copper) was measured. This result was plotted with -•-in the graph of FIG. 4.

Table 1 shows component analysis results of the recovered metal (metallic copper) measured by ICP.

Further, table 2 shows the recovery rate of PGM after water cooling in this comparative example.

(Comparative example 2)

The same operation as in example 1 was performed except that $Cu_2O$ powder was not added to the molten slag sample.

The recovered metal (metallic copper) was separated from each recovered molten slag sample. Then, the Pt concentration in the molten slag sample after separating the recovered metal (metallic copper) was measured. This result was plotted with -♦-in the graph of FIG. 4.

Table 1 shows component analysis results of the recovered metal (metallic copper) measured by ICP.

Further, table 2 shows the recovery rate of PGM after water-cooling in this comparative example.

(Example 3)

When adjusting the slag that imitates the molten slag obtained in the above example of the method for recovering PGM, the same operation as in example 1 was performed except that Pd powder was added instead of the Pt powder.

The recovered metal (metallic copper) was separated from each recovered molten slag sample. Then, the Pd concentration in the molten slag sample after separating the recovered metal (metallic copper) was measured. This result was plotted with-Δ--- in the graph of FIG. 4.

Table 1 shows component analysis results of the recovered metal (metallic copper) measured by ICP.

Further, table 2 shows the recovery rate of PGM after water-cooling in this example.

(Comparative example 3)

When adjusting the slag that imitates the molten slag obtained in the above example of the method for recovering PGM, the same operation as in comparative example 1 was performed except that Pd powder was added instead of the Pt powder.

The recovered metal (metallic copper) was separated from each recovered molten slag sample. Then, the Pd concentration in the molten slag sample after separating the recovered metal (metallic copper) was measured. This result was plotted witho--- in the graph of FIG. 4.

Table 1 shows component analysis results of the recovered metal (metallic copper) measured by ICP.

Further, table 2 shows the recovery rate of PGM after water-cooling in this comparative example.

(Comparative example 4)

When adjusting the slag that imitates the molten slag obtained in the above example of the method for recovering PGM, the same operation as in comparative example 2 was performed except that Pd powder was added instead of the Pt powder.

The recovered metal (metallic copper) was separated from each recovered molten slag sample. Then, the Pd concentration in the molten slag sample after separating the recovered metal (metallic copper) was measured. This result is plotted with ... ◇ ... in the graph of FIG. 4.

Table 1 shows component analysis results of the recovered metal (metallic copper) measured by ICP.

Further, table 2 shows a recovery rate of the PGM after water-cooling in this comparative example.

(Conclusion)

In examples 1 to 3 in which $Cu_2O$ was added as a base metal oxide to the molten slag sample, it was confirmed that the concentration of Pt or Pd contained in the molten slag sample decreased remarkably with a passage of time, and Pt or Pd was recovered. The recovery of Pt or Pd could be confirmed from a high concentration of Pt or Pd in the analysis result of the recovered metal.

In contrast, it was also confirmed that the Pt or Pd concentration decreased slightly in the comparative example 1 in which Cu was added as a base metal to the molten slag sample, and the Pt or Pd concentration hardly decreases, and the recovery of Pt hardly progresses in the comparative example 2 in which nothing was added. It was confirmed that the recovery of Pt was slow, because the concentration of Pt or Pd was low according to the analysis result of the recovered metal.

[Table 1]

|  | Pt | Al | Si | Cu |
|---|---|---|---|---|
|  | (mass %) | (mass %) | (mass %) | (mass %) |
| Example 1 | 1.67 | 0.092 | 0.094 | 98.1 |
| Comparative example 1 | 0.14 | 0.094 | 0.095 | 99.7 |

[Table 2]

|  | Addition amount of additive | | PGM recovery rate | |
|---|---|---|---|---|
|  | $Cu_2O$ | Cu | Kind |  |
|  | (g) | (g) |  | (mass %) |
| Ex. 1 | 33.78 | - |  | 99.6 |
| Ex. 2 | 67.56 | - |  | 99.9 |
| Com.Ex.1 | - | 30.0 | Pt | 85.9 |
| Com.Ex.2 | - | - |  | 31.1 |
| Ex. 3 | 33.78 | - |  | 99.8 |
| Com.Ex.3 | - | 30.0 | Pd | 59.8 |
| Com.Ex.4 | - | - |  | 28.6 |
| Ex. = Example<br>Com.Ex. = Comparative example | | | | |

Description of signs and numerals

(1)  Flux
(2)  Object to be treated
(3)  Extractant
(4)  Reducing agent
(5)  Reduction furnace used for reduction smelting
(6)  Reduction furnace metal
(7)  Molten slag
(8)  Oxide
(9)  Oxidation furnace used for oxidative smelting
(10)  PGM alloy
(11)  Base metal oxide slag
(21)  Base metal oxide
(22)  Reduction furnace
(23)  Molten slag in the reduction furnace
(24)  Recovered metal
(25)  Molten slag after recovering the recovered metal
(26)  Molten slag after recovering PGM alloy

**Claims**

1.  A method for recovering PGM, comprising:

    placing an object to be treated containing PGM, a base metal and/or a base metal oxide, a flux, and a reducing agent in a reduction furnace used for reduction smelting, and heating a mixture thereof, to form a molten slag and a reduction furnace metal;

extracting the molten slag from the reduction furnace to obtain a reduction furnace metal containing PGM; and transferring the reduction furnace metal to an oxidation furnace used for oxidative smelting, forming a base metal oxide slag and a PGM alloy, then, extracting the base metal oxide slag to obtain a PGM alloy enriched with PGM,

wherein at least one base metal oxide selected from a group consisting of copper oxide, iron oxide, tin oxide, nickel oxide and lead oxide is added to the molten slag, to recover the PGM alloy contained in the molten slag.

2. The method for recovering PGM according to claim 1, wherein less than 35 mass% of the base metal oxide with respect to a mass of the molten slag, is added.

3. The method for recovering PGM according to claim 1 or 2, wherein at least one base metal oxide selected from the group consisting of copper oxide, iron oxide, tin oxide, nickel oxide and lead oxide is added to the molten slag, and when recovering the PGM alloy contained in the molten slag, a retaining time of at least 2 hours is provided.

4. The method for recovering PGM according to any one of claims 1 to 3,

wherein 10 times or more and 500 times or less of the mass of the PGM contained in the molten slag is added as the base metal oxide.

FIG. 1

# FIG. 2

Object to be treated (2)

Extractant (3) | Pulverization | Reducing agent (4) | Flux (1)

Base metal oxide (21)

**Reduction furnace (5)**

**Molten slag: in-furnace (7)**

**Reduction furnace metal: in-furnace (6)**

Molten slag (7)

Reduction furnace (22)

Molten slag: in-furnace (23)

Recovered metal: in-furnace (24)

Molten slag (25)

Repeat

Air/oxygen | Reduction furnace metal (6) | Oxide (8)

Recovered metal (24)

**Oxidation furnace (9)**

Base metal oxide slag (11) | PGM alloy (10)

Separate step

Recovery of PGM

Recovery of PGM

PGM

PGM

EP 4 001 443 A1

# FIG. 3

Object to be treated (2)

Extractant (3)   Pulverization   Reducing agent (4)   Flux (1)

Reduction furnace (5)

Repeat

Air/oxygen   Reduction furnace metal (6)   Oxide (8)   Molten slag: in-furnace (7)

Oxidation furnace (9)

Cu₂O slag (11)   PGM alloy (10)

Recovery of PGM

PGM

EP 4 001 443 A1

# FIG. 4

**INTERNATIONAL SEARCH REPORT**

| International application No. |
| --- |
| PCT/JP2020/026339 |

A.   CLASSIFICATION OF SUBJECT MATTER
C22B 5/02(2006.01)i; C22B 7/04(2006.01)i; C22B 11/02(2006.01)i
FI: C22B11/02; C22B5/02; C22B7/04 A

According to International Patent Classification (IPC) or to both national classification and IPC

B.   FIELDS SEARCHED

Minimum documentation searched (classification system followed by classification symbols)
C22B5/02; C22B7/04; C22B 11/02

Documentation searched other than minimum documentation to the extent that such documents are included in the fields searched
    Published examined utility model applications of Japan        1922–1996
    Published unexamined utility model applications of Japan      1971–2020
    Registered utility model specifications of Japan              1996–2020
    Published registered utility model applications of Japan      1994–2020

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | WO 2012/099009 A1 (DOWA METALS & MINING CO., LTD.) 26.07.2012 (2012-07-26) claims, paragraphs [0032]–[0075], fig. 1-10 | 1-4 |
| X | WO 2004/081243 A1 (DOWA MINING CO., LTD.) 23.09.2004 (2004-09-23) claims, page 7, line 18 to page 17, line 19 | 1-4 |
| X | WO 2012/108522 A1 (DOWA METALS & MINING CO., LTD.) 16.08.2012 (2012-08-16) claims, paragraphs [0041]–[0045], fig. 1-8 | 1-4 |
| X | JP 2010-77470 A (DOWA METALS & MINING CO., LTD.) 08.04.2010 (2010-04-08) claims, paragraphs [0012]–[0038] | 1-4 |

|  | Further documents are listed in the continuation of Box C. | ☒ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 08 September 2020 (08.09.2020) | 15 September 2020 (15.09.2020) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

International application No.

PCT/JP2020/026339

| Patent Documents referred in the Report | Publication Date | Patent Family | Publication Date |
|---|---|---|---|
| WO 2012/099009 A1 | 26 Jul. 2012 | US 2014/0053687 A1 claims, paragraphs [0066]-[0130], fig. 1-10 EP 2666876 A1 CA 2825122 A CN 103328662 A KR 10-2014-0005240 A | |
| WO 2004/081243 A1 | 23 Sep. 2004 | US 2006/0213323 A1 claims, paragraphs [0047]-[0087] EP 1607488 A1 CA 2516350 A KR 10-2005-0105231 A CN 1759194 A | |
| WO 2012/108522 A1 | 16 Aug. 2012 | JP 2012-167306 A | |
| JP 2010-77470 A | 08 Apr. 2010 | (Family: none) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009024263 A